# EUROPÄISCHE PATENTSCHRIFT

(11) **EP 0 478 951 B1**
(45) Veröffentlichungstag und Bekanntmachung des Hinweises auf die Patenterteilung: **12.07.1995**
(21) Anmeldenummer: 91114417.8
(22) Anmeldetag: 28.08.1991
(51) Int. Cl.: F16K 31/42

(54) **Elektro-pneumatisches Mehrwegeventil**
Electro-pneumatic multiple-way valve
Vanne électro-pneumatique à plusieurs voies

(30) Priorität: 01.10.1990 DE 4030982
(43) Veröffentlichungstag der Anmeldung: 08.04.1992
(73) Patentinhaber: ROBERT BOSCH GMBH, 70442 Stuttgart (DE)
(72) Erfinder: Stumpe, Werner, Dipl.-Ing., W-7000 Stuttgart 50 (DE)

(56) Entgegenhaltungen:
- EP-A- 0 358 834
- DE-B- 1 750 758
- US-A- 4 531 547

## Beschreibung

### Stand der Technik

Die Erfindung bezieht sich auf ein elektro-pneumatisches Mehrwege-Ventil nach der Gattung des Hauptanspruchs.

Aus US-A-4 531 547 ist ein derartiges Ventil bekannt. Dieses weist ein Hauptventil in der Bauart des 3/2-Wegeventils auf, d.h. in der einen Stellung ist ein Druckmittel-Einlaß mit einem Druckmittel-Auslaß verbunden, in der anderen Stellung ist eine Verbindung des Druckmittel-Auslasses mit einer Entlastungsstelle erzeugt. Hierzu hat das Ventil ein Vorsteuerventil, welches als elektromagnetbetätigtes 3/2-Wegeventil ausgebildet ist und in einer vom Druckmittel-Einlaß zu einer Servokammer als Kraftverstärker des Mehrwege-Ventils führenden Druckmittelleitung liegt. Die Servokammer ist durch eine am Schließkörper des Hauptventils befestigte Membran begrenzt. Das Vorsteuerventil hat einen stirnseitig je eine Schließplatte tragenden Magnetanker, der in zwei Stellungen schaltbar ist. In der einen Stellung ist die Servokammer mit dem Druckmittel-Einlaß verbunden, so daß eine Verstellkraft auf den Schließkörper des Hauptventils erzeugt wird. In der anderen Stellung steht die Servokammer mit einer Entlastungsstelle in Verbindung. Das Hauptventil vermag daher lediglich zwei bestimmte Schaltzustände einzunehmen.

### Vorteile der Erfindung

Das eingangs genannte Mehrwege-Ventil mit den kennzeichnenden Merkmalen des Hauptanspruchs hat demgegenüber den Vorteil, daß außer den Endstellungen eine unendliche Anzahl von Zwischenschaltstellungen mit veränderlicher Drosselwirkung bei relativ geringem baulichen Aufwand des Vorsteuerventils erzeugbar sind.

### Zeichnung

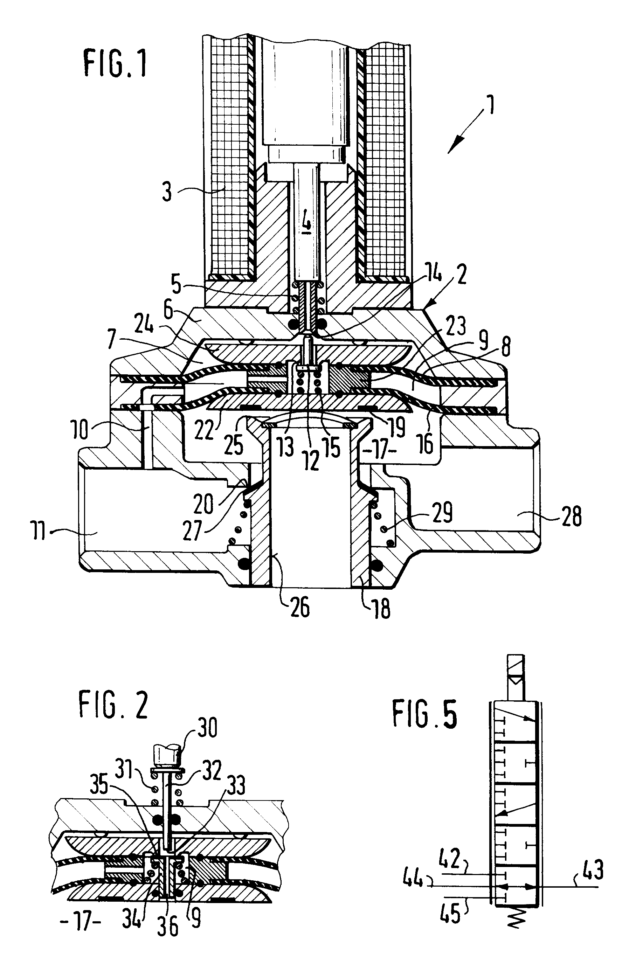

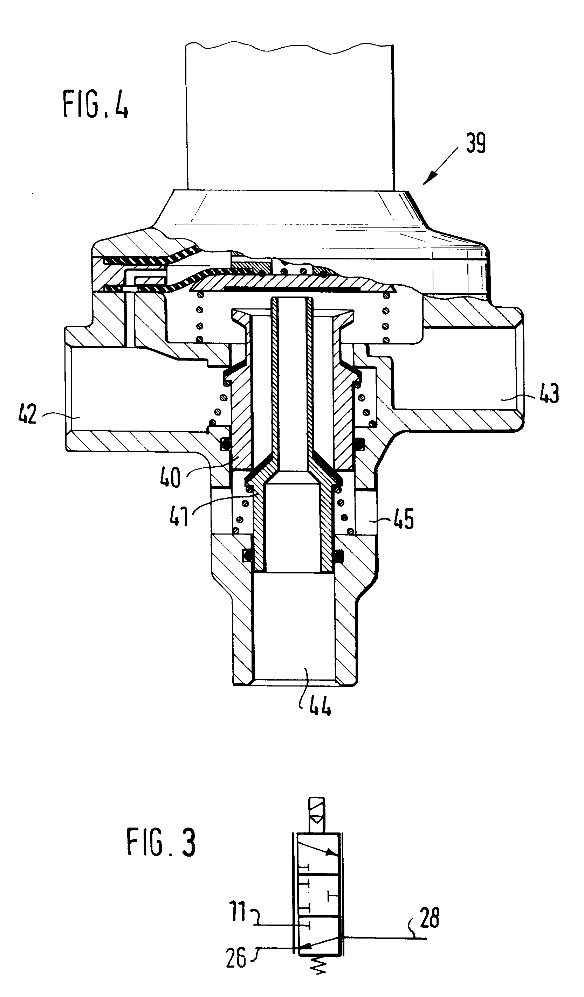

Zwei Ausführungsbeispiele der Erfindung sind in der Zeichnung dargestellt und in der nachfolgenden Beschreibung näher erläutert. Es zeigen: Figur 1 ein elektro-pneumatisches Mehrwege-Ventil, Figur 2 eine Abwandlung des Ventils nach der Figur 1, Figur 3 ein Schaltsymbol des Mehrwege-Ventils nach der Figur 1, Figur 4 ein elektro-pneumatisches Mehrwege-Ventil und Figur 5 ein Schaltsymbol des Mehrwege-Ventils nach der Figur 4.

### Beschreibung der Ausführungsbeispiele

Ein elektro-pneumatisches Mehrwege-Ventil 1 hat ein Gehäuse 2, in dessen Oberteil ein Proportional-Magnet 3 angeordnet ist. Der Magnet 3 betätigt einen Anker 4, der als Hohlstößel ausgebildet ist. Der Magnet 3 ist unter Zwischenlage einer am Anker 4 abgestützten Wegfeder 5 auf einen Ventildeckel 6 aufgesetzt.

Der Deckel 6 nimmt eine Servokammer 7 auf, die andererseits von einer Membran 8 begrenzt wird. Auf der Rückseite der Membran 8 ist eine Zwischenkammer 9 angeordnet, die über einen Kanal 10 ständig mit einem Druckmittel-Einlaß 11 verbunden ist. In der Zwischenkammer 9 ist ein Schließkörper 12 eines Doppelsitzventils 12, 13, 14 angeordnet, der von einer Ventilfeder 15 gegen einen Einlaßventilsitz 13 gedrückt wird. Ein Auslaßventilsitz 14 des Doppelsitzventils 12, 13, 14 ist am unteren Ende des hohlen Ankers 4 gebildet.

Die Zwischenkammer 9 wird auf ihrer Unterseite von einer zweiten Membran 16 begrenzt, die in Größe und Form der Membran 8 gleicht. Unter der Membran 16 liegt eine Druckwechselkammer 17 des Ventils 1. In sie ragt ein hohler Schließkörper 18 eines Doppelsitzventils 18, 19, 20 eines Hauptventils hinein, dessen Auslaßsitz 19 an der Unterseite einer Endplatte 22 einer Membran-Einspannung 22, 23, 24 vorgesehen ist. Zu der Membran-Einspannung 22, 23, 24 gehört auch noch eine in der Zwischenkammer 9 aufgenommene Zwischenplatte 23. Mit dem Auslaßsitz 19 arbeitet ein Ringrand 25 des Schließkörpers 18 des Hauptventils als Auslaßventil 19, 25 zusammen, und eine Außenluftverbindung des Hauptventils ist über eine Axialbohrung 26 des hohlen Schließkörpers 18 nach außen geführt. Eine Ringschulter 27 am Schließkörper 18 bildet mit einer Gehäuseschulter 20 ein Einlaßventil 20, 27 des Hauptventils. Die Ringschulter 27 des Einlaßventils 20, 27 liegt zwischen dem Druckmittel-Einlaß 11 und einem Druckmittel-Auslaß 28 des Hauptventils. Im Einlaß 11 ist eine den Schließkörper 18 konzentrisch umgebende Schrauben-Druckfeder 29 angeordnet, die bestrebt ist, den Schließkörper 18 mit seiner Ringschulter 27 gegen die Gehäuseschulter 20 zu drücken. Dabei ist das Einlaßventil 20, 27 des Hauptventils geschlossen.

Zum Betätigen des Ventils 1 wird der Magnet 3 mit Strom versorgt und der Proportional-Magnet 3 erzeugt proportional zum angelegten Strom eine Kraft. Diese betätigt das Doppelsitzventil 12, 13, 14, das als Vorsteuerventil dient. Geht der Anker 4 nach unten, wird unter Überwindung der Wegfeder 5 ein stromproportionaler Hub erzeugt. Die über den hohlen Anker 4 geführte Außenluftverbindung der Servokammer 7 wird geschlossen und es wird anschließend in der Zwischenkammer 9 der Schließkörper 12 von seinem Einlaß-Ventilsitz 13 abgehoben. Nun kann Druckmittel vom Einlaß 11 über den Kanal 10 über die Zwischenkammer 9 in die Servokammer 7 gelangen, und die Membran 8 wird nach unten bewegt, wobei die dadurch bewirkte Verstärkung dem Hub des Magnetstößels (Anker 4) nachgeführt wird. Beide Membranen 8 und 16 sowie die Membran-Einspannung 22, 23, 24 bewegen sich gemeinsam nach unten. Das Auslaßventil 19, 25 des Hauptventils wird geschlossen und anschließend wird das Einlaßventil 20, 27 geöffnet, so daß Druckmittel vom Einlaß 11 zum Auslaß 28 gelangen kann. Abhängig von der am Magneten 3 aufgewandten Stromstärke wird ein kleinerer oder größerer Querschnitt vom Einlaß 11 zum Auslaß 28 frei. Dabei führt der Verstärker den Hub aus, den der Proportional-Magnet 3 vorgibt. Die Schaltkräfte für das Hauptventil werden durch den Verstärker aufgebracht. Die zu durchströmenden Querschnitte am Hauptventil sind verhältnismäßig groß und wegen der großen Servokraft können dabei große und schnell wechselnde Stellkräfte aufgebracht werden.

Beim Absenken der Stromzufuhr zum Proportional-Magneten 3 wird der Durchgang vom Einlaß 11 zum Auslaß 28 wieder gesperrt. Der Druck, der sich am Auslaß 28 und damit an einem Verbraucher aufgebaut hat, kann somit gehalten werden. Zum Abbau des Druckes wird der Strom weiter gesenkt. Es ist zu erkennen, daß auf diese Weise eine gute Dosierung der das Hauptventil durchfließenden Energiemengen möglich ist und daß mit kleineren elektromagnetischen Stellkräften ein großes Hauptventil, auf das zeitlich nicht konstante Kräfte einwirken, betätigt werden kann.

In der Figur 2 ist eine Variante des Vorsteuerventils nach der Figur 1 dargestellt. Hier ist ein Anker 30 des Proportional-Magneten 3 als Vollkörper ausgebildet und es gibt einen, durch eine Wegfeder 31 belasteten Stößel 32, dessen freies Ende 33 ein Schließglied für ein Doppelsitzventil 33, 34, 35 ist. Ein Schließkörper 34 und ein Einlaßsitz 35 des Doppelsitzventils 33, 34, 35 sind in der Zwischenkammer 9 angeordnet. Der Schließkörper 34 hat einen koaxialen Außenluftkanal 36, der in die Druckwechselkammer 17 bzw. in die Axialbohrung 26 des Schließkörpers 18 mündet.

Dieses Vorsteuerventil arbeitet geradeso wie das nach der Figur 1, nur daß hier die Außenluftverbindung über die Axialbohrung 26 des Hauptventils geführt ist und damit beide Außenluftverbindungen zusammengefaßt sind.

Die Figur 3 stellt ein Schaltsymbol des beschriebenen Mehrwege-Ventils dar.

Die Figur 4 zeigt ein elektro-pneumatisches Mehrwege-Ventil, das bezüglich seines proportionalmagnetbetätigten Vorsteuerventils geradeso ausgeführt ist, wie das nach der Figur 1. Das Hauptventil 39 ist jedoch anders aufgebaut. Es hat zwei koaxial ineinanderliegende rohrförmige Schließkörper 40 und 41 und vier Anschlüsse 42, 43, 44 und 45. Dabei sind zunächst die Anschlüsse 43 und 44 miteinander verbunden. Die Durchgänge der Anschlüsse 42 und 45 sind abgesperrt. Die Arbeitsweise ist der nach der Figur 1 ähnlich. Mit der Erhöhung des Stromes wird zuerst die Verbindung von 44 nach 43 unterbrochen und dann der Durchgang von 43 nach 45 hergestellt. Der weitere Schaltablauf entspricht dem nach der Figur 1.

Die Figur 5 stellt ein Schaltsymbol des beschriebenen Mehrwege-Ventils dar, wobei die beiden dargestellten, geschlossenen Stellungen als eine einzige Stellung zu werten sind.

Es ist noch zu bemerken, daß der Druck in dem jeweils zu versorgenden Verbraucher gemessen wird. Bei Soll- oder Istwert-Abweichungen werden die Durchgänge durch das Hauptventil nach den allgemein bekannten Methoden der Regelungstechnik zum Be- oder Entlasten des Verbrauchers gesteuert.

## Patentansprüche

1. Elektro-pneumatisches Mehrwege-Ventil (1) mit Vorsteuerung durch ein elektromagnetbetätigtes, mit Einlaßventil (12, 13) und Auslaßventil (12, 14) ausgebildetes Vorsteuerventil (3, 4, 12, 13, 14), das eine Verbindung einer Servokammer (7) eines Kraftverstärkers (7, 8) mit einem Eingangsdruck führenden Druckmittel-Einlaß (11) mittels des Einlaßventils (12, 13) oder mit einer Entlastungsstelle mittels des Auslaßventils (12, 14) überwacht, wobei eine als erste Membran (8) ausgebildete bewegliche Wand der Servokammer (7) eine Verstellkraft des Kraftverstärkers (7, 8) auf einen Schließkörper (18) des Mehrwege-Ventils (1) überträgt,
dadurch gekennzeichnet,
daß zwischen der Servokammer (7) und dem Schließkörper (18) des Mehrwege-Ventils (1) mittels einer mit der ersten Membran (8) verbundenen zweiten Membran (16) eine Zwischenkammer (9) gebildet ist, die über einen Kanal (10) ständig mit dem Druckmittel-Einlaß (11) in Verbindung steht,
daß das Einlaßventil (12, 13) und das Auslaßventil (12, 14) des Vorsteuerventils (3, 4, 12, 13, 14) ein Doppelsitzventil (12, 13, 14) mit einem beiden Ventilen (12, 13; 12, 14) gemeinsamen Schließkörper (12) ist,
daß das Einlaßventil (12, 13) des Vorsteuerventils (3, 4, 12, 13, 14) eine Verbindung zwischen der Servokammer (7) und der Zwischenkammer (9) überwacht,
und daß der Anker (4) des Vorsteuerventils (3, 4, 12, 13, 14), das als Proportional-Magnetventil ausgebildet ist, durch Angriff an diesem Schließkörper (12) das Auslaßventil (12, 14) in die Schließstellung überführt, bevor mit zunehmendem Ankerhub das Einlaßventil (12, 13) die Verbindung zur Servokammer (7) freigibt.

2. Mehrwege-Ventil nach Anspruch 1, dadurch gekennzeichnet, daß das Einlaßventil (12, 13) des Vorsteuerventils (3, 4, 12, 13, 14) in der Zwischenkammer (9) und das Auslaßventil (12, 14) des Vorsteuerventils in der Servokammer (7) angeordnet sind.

3. Mehrwege-Ventil nach einem der Ansprüche 1 bis 2, dadurch gekennzeichnet, daß der Anker (4) des Vorsteuerventils (3, 4, 12, 13, 14) eine koaxiale, zur Entlastungsstelle führende Durchgangsbohrung mit einem Ventilsitz (14) für das Auslaßventil (12, 14) aufweist, dessen Schließkörper (12) einen Stößel bildet, welcher in der Zwischenkammer (9) ein Teil des Einlaßventils (12, 13) ist.

4. Mehrwege-Ventil nach einem der Ansprüche 1 bis 3, dadurch gekennzeichnet, daß auf der der Servokammer (7) abgekehrten Seite der Zwischenkammer (9) eine Druckwechselkammer (17) des Mehrwege-Ventils angeordnet ist.

5. Mehrwege-Ventil nach Anspruch 2, dadurch gekennzeichnet, daß der Anker (30) des Vorsteuerventils (3, 30, 33, 34, 35) einen Stößel (32) betätigt, der als bewegliches Schließglied (33) eines Doppelsitzventils (33, 34, 35) ausgebildet ist, dessen Einlaßsitz (35) und dessen Schließkörper (34) in der Zwischenkammer (9) liegen, und daß der Schließkörper (34) mit einem koaxialen Kanal (36) versehen ist, der mit der Außenluft in Verbindung steht.

6. Mehrwege-Ventil nach Anspruch 4, dadurch gekennzeichnet, daß die Servokammer (7), die Zwischenkammer (9) und die Druckwechselkammer (17) durch zwei gleichartige Membranen (8, 16) voneinander getrennt sind, daß die beiden Membranen (8, 16) durch je eine Endplatte (22, 24) in der Servokammer (9) und in der Druckwechselkammer (17) unter Zwischenlage einer in der Zwischenkammer (9) liegenden Zwischenplatte (23) mittig eingespannt sind und daß die in der Druckwechselkammer (17) liegende Endplatte (22) einen Auslaßsitz (19) für das Mehrwege-Ventil trägt.

7. Mehrwege-Ventil nach einem der Ansprüche 1 bis 6 mit drei Anschlußöffnungen (11, 26, 28), dadurch gekennzeichnet, daß ein beweglicher Schließkörper (18) des Mehrwege-Ventils (1) einen Ringbund (27) aufweist, der ein zwischen einem Einlaß-Anschluß (11) und einem Auslaß-Anschluß (28) angeordnetes Schließglied bildet.

8. Mehrwege-Ventil nach einem der Ansprüche 1 bis 6 mit vier Anschlußöffnungen (42, 43, 44, 45), dadurch gekennzeichnet, daß ein beweglicher Schließkörper (40, 41) des Mehrwege-Ventils (39) zweiteilig ausgeführt ist und daß jedes Schließkörperteil ein eigenes Auslaß-Schließglied aufweist.

9. Mehrwege-Ventil nach Anspruch 8, dadurch gekennzeichnet, daß die beiden Schließkörperteile (40 und 41) koaxial ineinanderliegend angeordnet sind.

## Claims

1. Electro-pneumatic multiway valve (1) with pilot control by means of an electromagnetically actuated pilot control valve (3, 4, 12, 13, 14) which is constructed with inlet valve (12, 13) and outlet valve (12, 14) and monitors a connection of a servochamber (7) of a power booster (7, 8) to a pressure-medium inlet (11), which conducts input pressure, by means of the inlet valve (12, 13) or to a pressure-relief point by means of the outlet valve (12, 14), a movable wall of the servo-chamber (7), which wall is constructed as a first diaphragm (8), transmitting an adjustment force of the power booster (7, 8) to a closing element (18) of the multiway valve (1), characterized in that an intermediate chamber (9) which is continuously connected to the pressure-medium inlet (11) via a channel (10) is formed between the servochamber (7) and the closing element (18) of the multiway valve (1) by means of a second diaphragm (16) which is connected to the first diaphragm (8), in that the inlet valve (12, 13) and the outlet valve (12, 14) of the pilot control valve (3, 4, 12, 13, 14) is a double-seated valve (12, 13, 14) with a closing element (12) which is common to both valves (12, 13; 12, 14), in that the inlet valve (12, 13) of the pilot control valve (3, 4, 12, 13, 14) monitors a connection between the servochamber (7) and the intermediate chamber (9), and in that the armature (4) of the pilot control valve (3, 4, 12, 13, 14) which is constructed as a proportional solenoid valve, and, by engaging on this closing element (12) moves the outlet valve (12, 14) into the closed position before, with increasing armature stroke, the inlet valve (12, 13) clears the connection to the servochamber (7).

2. Multiway valve according to Claim 1, characterized in that the inlet valve (12, 13) of the pilot control valve (3, 4, 12, 13, 14) is arranged in the intermediate chamber (9) and the outlet valve (12, 14) of the pilot control valve is arranged in the servochamber (7).

3. Multiway valve according to one of Claims 1 to 2, characterized in that the armature (4) of the pilot control valve (3, 4, 12, 13, 14) has a coaxial through-hole which leads to the pressure-relief point and has a valve seat (14) for the outlet valve (12, 14) whose closing element (12) forms a plunger which, in the intermediate chamber (9), is part of the inlet valve (12, 13).

4. Multiway valve according to one of Claims 1 to 3, characterized in that a pressure-changing chamber (17) of the multiway valve is arranged on the side of the intermediate chamber (9) facing away from the servochamber (7).

5. Multiway valve according to Claim 2, characterized in that the armature (30) of the pilot control valve (3, 30, 33, 34, 35) actuates a plunger (32) which is constructed as a movable closing component (33) of a double-seated valve (33, 34, 35) whose inlet seat (35) and whose closing element (34) lie in the intermediate chamber (9), and in that the closing element (34) is provided with a coaxial channel (36) which is connected to the external air.

6. Multiway valve according to Claim 4, characterized in that the servochamber (7), the intermediate chamber (9) and the pressure-changing chamber (17) are separated from one another by two diaphragms (8, 16) of the same kind, in that the two diaphragms (8, 16) are clamped in centrally by means of in each case one end plate (22, 24) in the servochamber (9) and in the pressure-changing chamber (17) with the intermediate positioning of an intermediate plate (23) which lies in the intermediate chamber (9), and in that the end plate (22) which lies in the pressure-changing chamber (17) bears an outlet seat (19) for the multiway valve.

7. Multiway valve according to one of Claims 1 to 6 with three connection ports (11, 26, 28), characterized in that a movable closing element (18) of the multiway valve (1) has an annular collar (27) which forms a closing element which is arranged between an inlet connection (11) and an outlet connection (28).

8. Multiway valve according to one of Claims 1 to 6 with four connection ports (42, 43, 44, 45), characterized in that a movable closing element (40, 41) of the multiway valve (39) is of two-component design, and in that each part of the closing element has its own outlet closing component.

9. Multiway valve according to Claim 8, characterized in that the two closing element parts (40 and 41) are arranged lying coaxially one in the other.

## Revendications

1. Vanne électropneumatique à plusieurs voies (1), avec une commande préalable par une vanne de commande préalable (3, 4, 12, 13, 14) à commande électromagnétique, comportant une vanne d'entrée (12, 13) et une vanne de sortie (12, 14), et qui surveillent une liaison d'une chambre de servocommande(7) d'un amplificateur de force (7, 8) à une entrée de fluide sous pression (11) qui est à une pression d'entrée, par l'intermédiaire de la vanne d'entrée (12, 13) ou avec un point de décharge par l'intermédiaire de la vanne de sortie (12, 14), une paroi mobile de la chambre de servocommande (7) en forme de première membrane (8) transmettant la force de déplacement de l'amplificateur de force (7, 8) à un organe-obturateur (18) de la vanne à plusieurs voies (1),caractérisée en ce que :
- entre la chambre de servocommande (7) et l'organe d'obturation (18) de la vanne à plusieurs voies (1), à l'aide d'une seconde membrane (16) reliée à la première membrane (8) , on forme une chambre intermédiaire (9) communiquant en permanence avec l'entrée de fluide sous pression (11) par un canal (10) ;
- la vanne d'entrée (12, 13) et la vanne de sortie (12, 14) de la vanne de commande préalable (3, 4, 12, 13, 14) est une vanne à double siège (12, 13, 14) avec un organe d'obturation (12) commun aux deux vannes (12, 13 ; 12, 14) ;
- la vanne d'entrée (12, 13) de la vanne de commande préalable (3, 4, 12, 13, 14) surveille une liaison entre la chambre de servocommande (7) et la chambre intermédiaire (9) ;
- et l'induit (4) de la vanne de commande préalable (3, 4, 12, 13, 14) est en forme d'électrovanne proportionnelle qui, en agissant sur l'organe d'obturation (12) conduit la vanne de sortie (12, 14) en position de fermeture avant que l'augmentation de la course de l'induit, la vanne d'entrée (12, 13) libère la liaison vers la chambre de servocommande (7).

2. Vanne à plusieurs voies selon la revendication 1, caractérisée en ce que la vanne d'entrée (12, 13) de la vanne de commande préalable (3, 4, 12, 13, 14) est logée dans la chambre intermédiaire (9) et la vanne de sortie (12, 14) de la vanne de commande préalable est logée dans la chambre de servocommande (7).

3. Vanne à plusieurs voies selon l'une des revendications 1 et 2, caractérisée en ce que l'induit (4) de la vanne de commande préalable (3, 4, 12, 13, 14) comporte un perçage traversant, coaxial conduisant au point de décharge, avec un siège de soupape (14) pour la vanne de sortie (12, 14), dont l'organe d'obturation (12) forme un poussoir constituant une partie de la vanne d'entrée (12, 13) dans la chambre intermédiaire (9).

4. Vanne à plusieurs voies selon l'une des revendications 1 à 3, caractérisée en ce que du côté de la chambre intermédiaire (9) opposée à la chambre de servocommande (7), il y a une chambre de pression alternée (17) de la vanne à plusieurs voies.

5. Vanne à plusieurs voies selon la revendication 2, caractérisée en ce que l'induit (30) de la vanne de commande préalable (3, 30, 33, 34, 35) actionne un poussoir (32) réalisé en forme d'organe d'obturation (33) mobile d'une vanne à double siège (33, 34, 35) dont le siège d'entrée (35) et l'organe d'obturation (34) se situent dans la chambre intermédiaire (9) et en ce que l'organe d'obturation (34) est muni d'un canal coaxial (36) communiquant avec l'air extérieur.

6. Vanne à plusieurs voies selon la revendication 4, caractérisée en ce que la chambre de servocommande (7), la chambre intermédiaire (9) et la chambre à pression alternée (17) sont séparées l'une de l'autre par deux membranes (8, 16) de même type et les deux membranes (8, 16) sont fixées chaque fois par une plaque d'extrémité (22, 24) dans la chambre intermédiaire (9) et dans la chambre de pression alternée (17) avec interposition d'une plaque intermédiaire (23) logée dans la chambre intermédiaire (9), assurant la fixation centrale et en ce que la plaque d'extrémité (22) située dans la chambre à pression alternée (17) porte un siège de sortie (19) pour la vanne à plusieurs voies.

7. Vanne à plusieurs voies selon l'une des revendications 1 à 6 comportant trois ajutages de branchement (11, 26, 28), caractérisée en ce qu'un organe d'obturation (18), mobile de la vanne à plusieurs voies (1) comporte une collerette annulaire (27) formant un organe d'obturation entre un ajutage d'entrée (11) et un ajutage de sortie (28).

8. Vanne à plusieurs voies selon l'une des revendications 1 à 6 comportant quatre ajutages (42, 43, 44, 45), caractérisée en ce que l'organe d'obturation (40, 41) mobile de la vanne à plusieurs voies (39) est en deux parties et chaque partie de l'organe d'obturation mobile comporte son propre organe d'obturation de la sortie.

9. Vanne à plusieurs voies selon la revendication 8, caractérisée en ce que les deux parties de l'organe d'obturation (40, 41) sont logées coaxialement l'une dans l'autre.
